**Europäisches Patentamt**

**European Patent Office**

**Office européen des brevets**

(19)

(11) Veröffentlichungsnummer: **0 198 189**
**B1**

(12)

# EUROPÄISCHE PATENTSCHRIFT

(45) Veröffentlichungstag der Patentschrift:
05.12.90

(51) Int. Cl.⁵: **C03C 15/00**, C03B 37/025

(21) Anmeldenummer: **86102730.8**

(22) Anmeldetag: **03.03.86**

(54) Verfahren zum Entfernen einer Oberflächenschicht von einem Metallfluorid-Glas.

(30) Priorität: **18.04.85 DE 3514082**

(43) Veröffentlichungstag der Anmeldung:
**22.10.86 Patentblatt 86/43**

(45) Bekanntmachung des Hinweises auf die Patenterteilung:
**05.12.90 Patentblatt 90/49**

(84) Benannte Vertragsstaaten:
**DE FR GB**

(73) Patentinhaber: **GALILEO ELECTRO-OPTICS CORPORATION, Galileo Park P. O. Box 550, Sturbridge, MA 01566(US)**

(72) Erfinder: **Schneider, Hartmut, Dr., Ignaz-Günther-Str. 42, D-8000 München 81(DE)**

(74) Vertreter: **Heusler, Wolfgang, Dipl.-Ing. et al, Dr. Dieter von Bezold Dipl.-Ing. Peter Schütz Dipl.-Ing. Wolfgang Heusler Brienner Strasse 52, D-8000 München 2(DE)**

(56) Entgegenhaltungen:
JOURNAL OF THE AMERICAN CERAMIC SOCIETY, Band 67, November 1984, Seiten C238-C239, Columbus, Ohio, US; G.H. FRISCHAT et al.: "Chemical durability of fluorozirconate glasses"
JOURNAL OF THE AMERICAN CERAMIC SOCIETY, Band 68, Nr. 7, Juli 1985, Seiten C171-C173, Columbus, Ohio, US; D. TREGOAT et al.: "Surface-OH profile from reaction of a heavy-metal fluoride glass with atmospheric water"
CHEMICAL ABSTRACTS, Band 104, Nr. 4, Januar 1986, Seite 238, Zusammenfassung Nr. 23263t, Columbus, Ohio, US; D. TREGOAT et al.: "Aqueous corrosion of a HMFG", & MATER. SCI. FORUM. 1985, 5(HALIDE GLASSES, VOL. 1), 335-8
JOURNAL OF MATERIALS SCIENCE LETTERS, Band 3, Nr. 6, Juni 1984, Seite 484-488, Chapman and Hall Ltd,

(56) Entgegenhaltungen: (Fortsetzung)
London, GB; R.H. DOREMUS et al.: "Zirconium fluoride glass: surface crystals formed by reaction with water"

ACTORUM AG

## Beschreibung

Die vorliegende Erfindung betrifft gemäß dem Oberbegriff des Patentanspruchs 1 ein Verfahren zum Entfernen einer Oberflächenschicht von einem, insbesondere zur Herstellung von Fasern für die optische Nachrichtentechnik geeigneten, Metallfluorid-Glas, das Ionen wenigstens eines chemischen Elements enthält, dessen Fluorid schwer wasserlöslich ist.

In der optischen Nachrichtentechnik kommen heute Lichtleitfasern auf der Basis von Quarzglas zum Einsatz, die ihre maximale Transparenz bei der Wellenlänge 1,5 µm besitzen. Für niedrige Dämpfungen werden Materialien entwickelt, deren Infrarotabsorptionskante zu größeren Wellenlängen verschoben ist und die in ihrem Streuverhalten gleich gut oder besser sind als das bekannte Quarzglas. Infrage kommen hier Halogenide. Insbesondere die Fluoridgläser weisen neben der im Vergleich zu den Oxiden um etwa 3-4 µm in Richtung größerer Wellenlängen verschobenen Infrarotabsorption auch noch hinreichende Hydrolysebeständigkeit auf. Während früher nur Fluoridgläser auf der Basis des hochgiftigen $BeF_2$ bekannt waren, können seit 1975 auch physiologisch weniger bedenkliche Gläser aus Schwermetallfluoriden hergestellt werden. Grundkomponenten sind hier die vierwertigen Fluoride $ZrF_4$, $HfF_4$, $ThF_4$ und ihre Mischungen oder die dreiwertigen Fluoride $AlF_3$, $ScF_3$ und $YF_3$ und auch zweiwertige Fluoride wie $CdF_2$. Diese Hauptbestandteile geben jedoch jeweils erst in der Mischung mit $BaF_2$ glasbildende Schmelzen (siehe dazu Marcel Poulain: Halide Glasses, J. Non-Cryst. Solids 56 (1983) 1-4).

Chemisch handelt es sich somit um Bariumsalze der komplexen Fluorometallsäuren. Man kann zwar die Kristallisationsneigung der Schmelzen beim Abkühlen durch Zusätze chemisch verwandter Fluoride wie $AlF_3$, $LaF_3$, $GdF_3$, $PbF_2$, NaF oder LiF verringern. Für klare Gläser ist jedoch ein rasches Abschrecken erforderlich, das nur durch den Kontakt mit der heißen Schmelze mit einer kälteren Metalloberfläche erreicht wird. Dies führt in der Regel zu Proben, die oberflächlich mehr oder weniger durch Fremdstoffe kontaminiert sind. Die Erfahrung lehrt, daß sich aus derartigen, durch Formgießen erhaltenen Glasstäben nur Fasern geringer mechanischer Festigkeit ziehen lassen.

Eine bekannte Methode, dieses Problem zu lösen, besteht darin, die Stäbe vor dem Faserziehen mechanisch zu polieren und dadurch die Festigkeit zu verbessern (siehe dazu H. Poignant, J. Le Mellot, Y. Bossis: Infrared fluorozirconate and fluorohafnate glass optical fibres, Proc. 8th Europ. Conf. Opt. Comm. Cannes, 1982, S. 81-83). Dabei besteht jedoch die Gefahr der Verschmutzung durch Schleifpartikel. Außerdem trübt sich die Glasoberfläche leicht beim Kontakt mit wäßrigen Medien, was auch beschrieben wurde und auf einen Ionenaustausch $F^-$ gegen $OH^-$ aus der wäßrigen Phase zurückzuführen ist (siehe dazu G.H. Frischat, I. Overbeck: Chemical durability of fluorozirconate glasses, J. Amer. Ceram. Soc. 67 (1984) C-238 - C-239). Maßnahmen zur Entfernung dieser trüben Schicht wurden bisher nicht angegeben.

Aufgabe der vorliegenden Erfindung ist es, ein Verfahren der eingangs genannten Art anzugeben, das einen raschen, gleichmäßigen, trübungsfreien Abtrag einer Oberflächenschicht des Glases ermöglicht.

Diese Aufgabe wird gemäß dem kennzeichnenden Teil des Patentanspruchs 1 dadurch gelöst, daß die Oberflächenschicht mit einem Ätzmittel abgeätzt wird, in dem wenigstens ein Fluorid-Komplexbildner oder/und wenigstens ein mit den Ionen des chemischen Elements, dessen Fluorid schwer wasserlöslich ist, zur Komplexbildung befähigter Komplexbildner gelöst ist/sind. "Schwer wasserlöslich" soll dabei auch "wasserunlöslich" mitumfassen.

Durch das erfindungsgemäße Verfahren ist eine Ätzprozedur gefunden worden, mit der vorteilhafterweise sowohl ein rascher, gleichmäßiger und trübungsfreier Abtrag einer gestörten Oberflächenschicht als auch eine Politur der Oberfläche erhalten werden kann. Die gestörte Oberflächenschicht kann beispielsweise eine durch Fremdstoffe kontaminierte oder auch verletzte Oberflächenschicht und/oder eine durch Kontakt mit wäßrigen Medien getrübte Schicht sein.

Das erfindungsgemäße Verfahren wurde ausgehend von der Vermutung gefunden, daß es sich bei der genannten trüben Oberflächenschicht im wesentlichen um wasserunlösliches Bariumfluorid handelt. Zum besseren Verständnis der Erfindung sei der Sachverhalt mit Hilfe der folgenden formalen Reaktionsgleichungen tendentiell erläutert. Dabei wurde Bariumhexafluorzirkonat als Beispiel für das Verhalten der Bariumfluorometallate gewählt, bei denen Barium das chemische Element ist, dessen Fluorid schwer wasserlöslich ist (Anspruch 3). Ähnliche Gleichungen lassen sich für die übrigen Glasbildner formulieren, die Ionen eines Elements enthalten, dessen Fluorid schwer wasserlöslich ist. In erster Linie kommen dafür Erdalkalien und Blei in Frage (Anspruch 2).

Reaktionsgleichungen:

$$BaZrF_6(fest) + 2H^+(Lsg.) \rightleftharpoons Ba^{2+}(Lsg.) + H_2ZrF_6(Lsg.) \quad (1)$$
$$H_2ZrF_6(Lsg.) + H_2O(fl.) \rightleftharpoons H_2ZrOF_4(Lsg.) + 2HF(Lsg.) \quad (2)$$
$$Ba^{2+}(Lsg.) + 2 HF(Lsg.) \rightleftharpoons BaF_2(fest) + 2H^+(Lsg.) \quad (3)$$

wobei Lsg. = Lösung und fl. = flüssig bedeuten.

Die Hexafluoridzirkonsäure, die sich nach Gleichung (1) bei der Auflösung des festen Glases in Säure bildet, kann nach Gleichung (2) durch Wasser teilweise hydrolysiert werden, was dann zur Ausfällung von festem $BaF_2$ auf der Glasoberfläche führt (siehe Gleichung (3) und W.B. Blumenthal: The chemical behavior of zirconium, Van Nostrand, Princeton, 1958, S. 143).

Durch Zugabe eines Fluorid- oder eines Barium-Komplexbildners - bei anderen Elementen, deren Fluorid schwer wasserlöslich ist, muß ein mit einem solchen Element zur Komplexbildung befähigter Komplexbildner gewählt werden - läßt sich die Ionenkonzentration so weit verringern, daß der $BaF_2$-Niederschlag - oder der Niederschlag des schwer wasserlöslichen Fluorids des entsprechenden Elements - unterbleibt. Da im Fall des Elements Barium nur wenige, meist schwache Bariumkomplexe bekannt sind, fällt die Wahl vorzugsweise auf die Fluoridkomplexbildner (Anspruch 4), und zwar bevorzugt auf die Zirkon(IV)-oder Titan(IV)-Salze (Anspruch 5), die, wie bekannt ist, besonders stabile Fluorid-Komplexe gemäß der Reaktionsgleichung

$$Zr^{4+}(Lsg.) + nF^-(Lsg.) \rightleftarrows ZrF_n^{(4-n)+}(Lsg.) \quad (4)$$

für n = 1 bis 6

bilden und daher auch bei anderen Glasbildnern von Vorteil sind.

In diesem Zusammenhang wird darauf hingewiesen, daß die Verwendung eines Fluorozirkonats (Anspruch 7), beispielsweise eines Bariumfluorozirkonats, in dem Sinne vorteilhaft ist, daß Zirkon selber ein Glasbestandteil ist. Verwendet man dann einen Fluorid-Komplexbildner aus der Gruppe der Zirkon(IV)-Salze allein (Anspruch 6), hat dies den Vorteil, daß die Gefahr einer Verunreinigung der Oberfläche durch das Ätzmittel nicht besteht.

In dem nach Gleichung (4) definierten Komplex wird das erste Fluoridion besonders festgebunden, weshalb zweckmäßigerweise mit einem deutlichen Zr-Überschuß gearbeitet wird (Anspruch 8), d.h. auf je ein Zirkonion sollen nur wenige, vorzugsweise höchstens zwei, Fluorionen treffen.

Vorteilhafterweise wird ein saures Ätzmittel verwendet (Anspruch 9), das insbesondere auch schwachsauer (Anspruch 10) sein kann, wobei aber der PH-Wert höchstens 6 sein sollte. Bevorzugterweise enthält das Ätzmittel Salzsäure (Anspruch 11).

Wie das Experiment bestätigt, läßt sich mit einem Ätzmittel in Form einer sauren Zr(IV)-Salze enthaltenden Lösung eine kongruente und rasche Auflösung eines Bariumfluoridzirkonat-Glases erreichen. Durch Änderung der Säurekonzentration und der Temperatur kann die Ätzrate beeinflußt werden. Je stärker die Säurekonzentration ist, desto größer ist die Ätzrate. Zum Ziehen von Fasern für die optische Nachrichtentechnik vorgesehene Glasstäbe, deren Oberfläche in dieser Weise abgetragen wurde (Anspruch 13), konnten zu Fasern mit deutlich verbesserter Festigkeit und weitgehend kristallfreier Faseroberfläche ausgezogen werden. Ein für diesen Zweck geeignetes spezielles Verfahren ist im Anspruch 12 angegeben.

In gleicher Weise können auch die beim MCVD-Verfahren (modified chemical vapor deposition-Verfahren) verwendeten und zu kollabierenden Glasrohre vor oder während des Kollabierens auf der Innenseite geätzt werden (Anspruch 14).

Die Erfindung wird anhand der Figuren in der folgenden Beschreibung beispielhaft näher erläutert. Von den Figuren zeigen:

Figur 1 in einer schematischen Schnittdarstellung einen in Ätzmittel in einem Gefäß eingehängten Fluoridglasstab,
Figur 2 einen Ausschnitt aus der Oberfläche des ungeätzten Stabes in vergrößerter Darstellung, und
Figur 3 einen Ausschnitt aus der Oberfläche des geätzten Stabes in vergrößerter Darstellung.

Die Figuren sind schematische Darstellungen.

Ausführungsbeispiel:

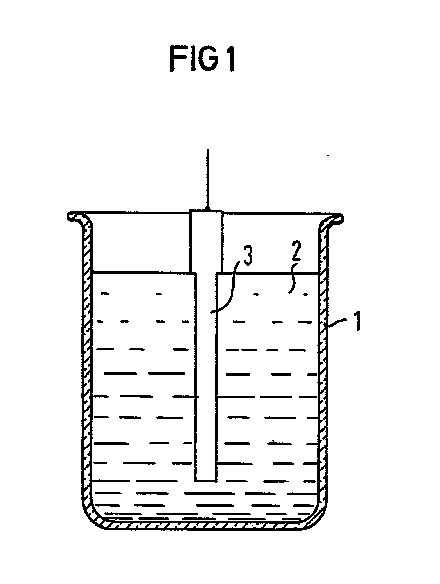

Durch Auflösen von $ZrOCl_2.8H_2O$ oder $ZrCl_4$ in 5 %iger Salzsäure wird eine 0,5 molare $Zr^{4+}$-Lösung hergestellt, die sich in dem Gefäß 1 in Figur 1 befinden möge. In die gerührte Lösung, die in der Figur 1 mit 2 bezeichnet ist, wird ein Fluoridglasstab 3 der molaren Zusammensetzung $57ZrF_4.34BaF_2.5$-$LaF_3.4AlF_3$ eingehängt.

Nach etwa 10 Minuten wird der Stab 3 entnommen, kurz - etwa 5 Sekunden - mit Wasser und dann beispielsweise etwa 1 Minute lang mit Propanol gewaschen und im Gasstrom getrocknet. Zur Verbesserung des Trocknungsvorganges wird dem Trockengas $N_2$ eine reaktive Komponente, wie beispielsweise Thionylchlorid ($SOCl_2$) zugesetzt, die bereits bei Raumtemperatur mit absorbiertem Restwasser zu leicht flüchtigem Chlorwasserstoff reagiert. Bei den beschriebenen Bedingungen ergab sich ein Abtrag von 0,1 mm, der durch Durchmesserbestimmung ermittelt wurde.

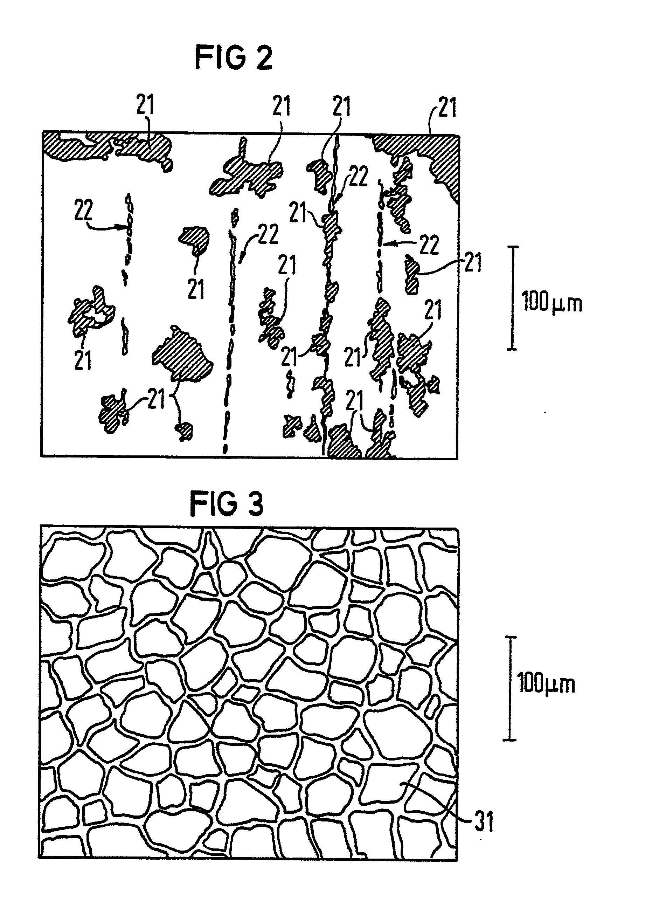

Die Figur 2 zeigt ausschnittsweise die Oberfläche des ungeätzten Stabes 3. Diese Oberfläche ist mit Fremdpartikeln kontaminiert, von denen nur die größeren gezeigt und mit 21 bezeichnet sind. In Wirklichkeit ist die Oberfläche noch mit zahlreichen Fremdpartikeln kleinerer Größe übersät. Darüberhinaus weist die Oberfläche auch noch Verletzungen in Form von Riefen 22 auf.

Die Figur 3 zeigt ausschnittsweise die Oberfläche des geätzten Stabes 3. Diese Oberfläche ist einheitlich von ziemlich regelmäßigen winzigen Ätzgruben 31 überzogen. Diese Oberfläche wirkt sich günstig auf die Qualität der aus dem Stab gezogenen Faser aus.

**Patentansprüche**

1. Verfahren zum Entfernen einer Oberflächenschicht von einem, insbesondere zur Herstellung von Fasern für die optische Nachrichtentechnik geeigneten, Metallfluorid-Glas, das Ionen wenigstens eines chemischen Elements enthält, dessen Fluorid schwer wasserlöslich ist, **dadurch gekennzeichnet**, daß die Oberflächenschicht mit einem Ätzmittel abgeätzt wird, in dem wenigstens ein Fluorid-Komplexbildner oder/und wenigstens ein mit den Ionen des chemischen Elements, dessen Fluorid schwer wasserlöslich ist, zur Komplexbildung befähigter Komplexbildner gelöst ist/sind.

2. Verfahren nach Anspruch 1, **dadurch gekennzeichnet**, daß ein chemisches Element, dessen Fluorid schwer wasserlöslich ist, aus der aus den Erdalkalien und Blei bestehenden Elementegruppe ausgewählt ist.

3. Verfahren nach Anspruch 2, **dadurch gekennzeichnet**, daß als chemisches Element, dessen Fluorid schwer wasserlöslich ist, Barium gewählt ist.

4. Verfahren nach einem der vorhergehenden Ansprüche, **dadurch gekennzeichnet**, daß in dem Ätzmittel wenigstens ein Fluorid-Komplexbildner und kein mit dem chemischen Element zur Komplexbildung befähigter Komplexbildner gelöst ist.

5. Verfahren nach Anspruch 4, **dadurch gekennzeichnet**, daß der Fluorid-Komplexbildner aus der Gruppe der Zirkon(IV)-Salze und/oder Titan(IV)-Salze ausgewählt ist.

6. Verfahren nach Anspruch 5, **dadurch gekennzeichnet**, daß der Fluorid-Komplex-Bildner aus der Gruppe der Zirkon(IV)-Salze allein ausgewählt ist.

7. Verfahren nach einem der vorhergehenden Ansprüche, insbesondere nach Anspruch 4, **dadurch gekennzeichnet**, daß das Metallfluoridglas aus einem Fluorozirkonat besteht.

8. Verfahren nach einem der Ansprüche 4 bis 7, **dadurch gekennzeichnet**, daß mit einem Zirkon-Überschuß gearbeitet wird.

9. Verfahren nach einem der vorhergehenden Ansprüche, **dadurch gekennzeichnet**, daß ein saures Ätzmittel verwendet wird.

10. Verfahren nach Anspruch 7, **dadurch gekennzeichnet**, daß ein schwachsaures Ätzmittel verwendet wird.

11. Verfahren nach anspruch 7 oder 8, **dadurch gekennzeichnet**, daß das Ätzmittel Salzsäure enthält.

12. Verfahren nach Anspruch 4, 5 und 11, **dadurch gekennzeichnet**, daß durch Auflösen von $ZrOCl_2.8H_2O$ oder $ZrCl_4$ in 5 %iger Salzsäure eine 0,5 molare $Zr^{4+}$-Lösung als Ätzmittel hergestellt wird, mit dem ein Glas der molaren Zusammensetzung $57ZrF_4. 34BaF_2 .5LaF_3.4AlF_3$ zum Abätzen der Oberflächenschicht in Kontakt gebracht wird.

13. Anwendung eines Verfahrens nach einem der vorhergehenden Ansprüche zum Abtragen der Oberfläche eines zum Ziehen von Fasern für die optische Nachrichtentechnik vorgesehenen Glasstabes zur Verbesserung der Qualität der Fasern.

14. Anwendung eines Verfahrens nach einem der Ansprüche 1 bis 12 zum Ätzen der Innenseite eines bei einem MCVD-Verfahren verwendeten und zu kollabierenden Glasrohres vor oder während des Kollabierens.

**Claims**

1. Process for removing a surface layer from a metal fluoride glass, in particular one suitable for the manufacture of fibres for optical communications technology, which contains ions of at least one chemical element, the fluoride of which is poorly soluble in water, characterised in that the surface layer is etched off with an etching agent in which is/are dissolved at least one fluoride complexes with the ions of the chemical element, the fluoride of which is poorly soluble in water.

2. Process according to Claim 1, characterised in that a chemical element, the fluoride of which is poorly soluble in water, is selected from the group of elements consisting of the alkaline earths and lead.

3. Process according to Claim 2, characterised in that barium is selected as the chemical element, the fluoride of which is poorly soluble in water.

4. Process according to one of the preceding Claims, characterised in that at least one fluoride complexing agent and no complexing agent which is capable of forming complexes with the chemical element is dissolved in the etching agent.

5. Process according to Claim 4, characterised in that the fluoride complexing agent is selected from the group of zirconium (IV) salts and/or titanium (IV) salts.

6. Process according to Claim 5, characterised in that the fluoride complexing agent is selected from the group of zirconium (IV) salts alone.

7. Process according to one of the preceding Claims, in particular according to Claim 4, characterised in that the metal fluoride glass consists of a fluorozirconate.

8. Process according to one of Claims 4 to 7, characterised in that one operates using an excess of zirconium.

9. Process according to one of the preceding Claims, characterised in that an acidic etching agent is used.

10. Process according to Claim 7, characterised in that a weakly acidic etching agent is used.

11. Process according to Claim 7 or 8, characterised in that the etching agent contains hydrochloric acid.

12. Process according to Claims 4, 5 and 11, characterised in that by dissolving $ZrOCL_2 \cdot 8H_2O$ or $ZrCL_4$ in 5% hydrochloric acid a 0.5 molar $Zr^{4+}$ solution is produced as an etching agent, with which a glass of the molar composition $57ZrF_4 \cdot 34BaF_2 \cdot 5LaF_3 \cdot 4AlF_3$ is brought into contact to etch away the surface layer.

13. Use of a process according to one of the preceding Claims to remove the surface of a glass rod intended for drawing fibres for optical communications technology in order to improve the quality of the fibres.

14. Use of a process according to one of Claims 1 to 12 for etching the inside of a glass tube, which is used in an MCVD process and which is to be collapsed, before or during the collapsing.

## Revendications

1. Procédé pour l'enlèvement d'une couche superficielle d'une verre au fluorure métallique se prêtant notamment à la fabrication de fibres pour la technique de télécommunication optique, lequel contient des ions d'au moins un élément chimique dont le fluorure est difficilement soluble dans l'eau, caractérisé en ce que la couche superficielle est éliminée par décapage à l'aide d'un réactif d'attaque dans lequel est/sont dissous au moins un complexant du fluorure ou/et au moins un complexant apte à complexer les ions de l'élément chimique dont le fluorure est difficilement soluble dans l'eau.

2. Procédé selon la revendication 1, caractérisé en ce qu'un élément chimique dont le fluorure est difficilement soluble dans l'eau est choisi dans le groupe d'éléments constitué par les métaux alcalino-terreux et le plomb.

3. Procédé selon la revendication 2, caractérisé en ce que le baryum est choisi comme élément chimique dont le fluorure est difficilement soluble dans l'eau.

4. Procédé selon l'une des revendications précédentes, caractérisé en ce qu'au moins un complexant du fluorure et un complexant apte à la complexation avec l'élément chimique sont dissous dans le réactif d'attaque.

5. Procédé selon la revendication 4, caractérisé en ce que le complexant du fluorure est choisi dans le groupe des sels de zirconium(IV) et/ou de sels de titane(IV).

6. Procédé selon la revendication 5, caractérisé en ce que le complexant du fluorure est choisi dans le groupe des seuls sels de zirconium(IV).

7. Procédé selon l'une des revendications précédentes, notamment selon la revendication 4, caractérisé en ce que le verre au fluorure métallique est constitué par un fluorozirconate.

8. Procédé selon l'une des revendications 4 à 7, caractérisé en ce que l'on opère avec un excès de zirconium.

9. Procédé selon l'une des revendications précédentes, caractérisé en ce qu'on utilise un réactif d'attaque acide.

10. Procédé selon la revendication 7, caractérisé en ce qu'on utilise un réactif d'attaque faiblement acide.

11. Procédé selon la revendication 7 ou 8, caractérisé en ce que le réactif d'attaque contient de l'acide chlorhydrique.

12. Procédé selon les revendications 4, 5 et 11, caractérisé en ce que, par dissolution de $ZrOCl_2 \cdot 8H_2O$ ou de $ZrCl_4$ dans de l'acide chlorhydrique à 5%, on prépare une solution de $Zr^{4+}$ 0,5 molaire en tant que réactif d'attaque avec lequel on met en contact un verre de composition molaire $57ZrF_4 \cdot 34BaF_2 \cdot 5LaF_3 \cdot 4AlF_3$ en vue de l'élimination de la couche superficielle par décapage.

13. Utilisation d'un procédé selon l'une des revendications précédentes pour l'arasement de la surface d'une baguette de verre pour le tirage de fibres destinées à la technique de télécommunication optique en vue d'améliorer la qualité des fibres.

14. Utilisation d'un procédé selon l'une des revendications 1 à 12 pour le décapage de la face interne d'un tube de verre utilisé dans un procédé MCVD et devant s'affaisser, avant ou pendant l'affaissement.

# FIG 1

## FIG 2

## FIG 3